(19) Europäisches Patentamt
European Patent Office
Office européen des brevets

(11) Veröffentlichungsnummer: **0 062 189**
**B1**

(12) # EUROPÄISCHE PATENTSCHRIFT

(45) Veröffentlichungstag der Patentschrift: **13.11.85**

(51) Int. Cl.⁴: **C 08 L 69/00**

(21) Anmeldenummer: **82102189.6**

(22) Anmeldetag: **18.03.82**

(54) **Polycarbonat mit verbesserter Schlagzähigkeit.**

(30) Priorität: **30.03.81 US 249276**

(43) Veröffentlichungstag der Anmeldung: **13.10.82 Patentblatt 82/41**

(45) Bekanntmachung des Hinweises auf die Patenterteilung: **13.11.85 Patentblatt 85/46**

(84) Benannte Vertragsstaaten: **DE FR GB IT NL**

(56) Entgegenhaltungen:
**DE - A - 2 252 974**
**DE - A - 2 811 846**
**US - A - 4 172 859**

**Die Akte enthält technische Angaben, die nach dem Eingang der Anmeldung eingereicht wurden und die nicht in dieser Patentschrift enthalten sind.**

(73) Patentinhaber: **Mobay Chemical Corporation, Penn Lincoln Parkway West, Pittsburgh, Pennsylvania 15205 (US)**

(72) Erfinder: **Witman, Mark W., 22 Orchard Drive, New Martinsville West Virginia, 26155 (US)**
Erfinder: **Reinert, Gerard E., 304 Friar Lane, McMurray Pennsylvania 15317 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 062 189 B1

**Beschreibung**

Gegenstand der Erfindung sind thermoplastische aromatische Polycarbonat-Zusammensetzungen mit verbesserter Schlagfestigkeit, enthaltend

(a) ein aromatisches Polycarbonat-Harz und
(b) von etwa 1 bis 4 Gew.-%, bezogen auf das Gewicht der Zusammensetzung, eines linearen Copolymerisats aus einem imidisiertem Derivat des Maleinsäureanhydrids und einem $\alpha$-Olefin der allgemeinen Formel

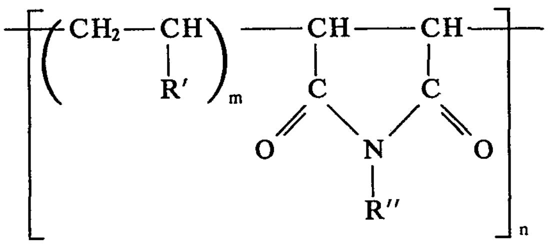

in der R′ ein $C_6$—$C_{28}$-Alkyl, vorzugsweise $C_{16}$-Alkyl, R″ ein Aryl-Rest mit 6—12 Kohlenstoff-Atomen oder ein aliphatischer Rest mit 1—30 Kohlenstoff-Atomen, n von 1—200, vorzugsweise 145, und m von 1—3, vorzugsweise 1, sind.

Gemäß der DE-A-2 811 846 werden Polycarbonaten 10 bis 90 Gew.-% eines Mischpolymerisats zugesetzt, das aus aromatischer Vinylverbindung und einem Aminostickstoffderivat einer äthylenisch ungesättigten Dicarbonsäure aufgebaut ist. Tabelle 1 der DE-A-2 811 846 zeigt nun, daß der Zusatz von 25% beziehungsweise 50% Styrol-Maleinimid zu Polycarbonat die Izod-Kerbschlagzähigkeit des Polycarbonats von 50 drastisch verringert. Auch der Zusatz von 2 Gew.-% eines Styrol-Maleinsäureimid-Copolymeren der DE-A-2 811 846 reduziert die Izod-Kerbschlagzähigkeit (bei 3,2 mm Dicke) eines Bisphenol-A-Homopolycarbonats ($\overline{M}$w etwa 28 000) von 9,05 J/cm auf 1,22 J/cm. Demgegenüber wird die Izod-Kerbschlagzähigkeit durch den erfindungsgemäßen Zusatz bei 3,2 mm Dicke nur geringfügig reduziert, bei 6,35 mm Dicke sogar erhöht.

Die bei der praktischen Ausführung der vorliegenden Erfindung einsetzbaren Polycarbonat-Harze sind Homopolycarbonate, Copolycarbonate und Terpolycarbonate sowie Mischungen aus diesen. Die Polycarbonate besitzen im allgemeinen Molekulargewichte von 10 000—200 000 (mittleres Molekulargewicht), vorzugsweise von 20 000—80 000. Sie können beispielsweise durch Polykondensation aus Phosgen und Bisphenolen mittels des bekannten Zweiphasen-Grenzflächen-Verfahrens hergestellt werden (vgl. die DE-OS 2 063 050, 2 063 052, 1 570 703, 2 211 956, 2 211 957 und 2 248 817 sowie die FR-PS 1 561 518, die Monographie von H. Schnell, »Chemistry and Physics of Polycarbonates«, New York 1964 [Interscience Publishers], auf die sämtlich hierin Bezug genommen wird).

Die aromatischen Polycarbonate können auf folgenden Bisphenolen basieren: Hydrochinon, Resorcin, Dihydroxydiphenyl-Verbindungen, Bis(hydroxyphenyl)alkanen, Bis(hydroxyphenyl)cycloalkanen, Bis(hydroxyphenyl)sulfiden, Bis(hydroxyphenyl)ethern, Bis(hydroxyphenyl)ketonen, Bis(hydroxyphenyl)sulfoxiden, Bis(hydroxyphenyl)sulfonen und $\alpha,\alpha'$-Bis(hydroxyphenyl)diisopropylbenzolen sowie auf den entsprechenden am Kern substituierten Verbindungen. Diese und andere geeignete aromatische Dihydroxy-Verbindungen wurden in den US-PS 3 028 365, 2 999 835, 3 148 172, 2 991 273, 3 271 367 und 2 999 846, den DE-OS 1 570 703, 2 063 050 und 2 063 052 und der FR-PS 1 561 518 beschrieben.

Bevorzugte aromatische Polycarbonate sind solche, in denen 5—100 Mol-% der Struktureinheiten der Formel (1),

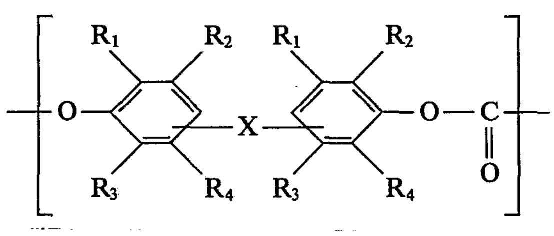

(1)

in der $R_1$, $R_2$, $R_3$ und $R_4$ für $C_1$—$C_{10}$-Alkyl, Cl, Br, Phenyl und H stehen, wobei jedoch nicht mehr als drei der Gruppen $R_1$, $R_2$, $R_3$ und $R_4$ H sein können, und X für eine Einfachbindung —O—, —CO—, $C_1$—$C_{10}$-Alkylen, $C_1$—$C_{10}$-Alkyliden, $C_5$—$C_{15}$-Cycloalkylen, $C_5$—$C_{15}$-Cycloalkyliden, $C_7$—$C_{20}$-Cycloalkyl-alkylen, $C_6$—$C_{20}$-Cycloalkyl-alkyliden oder

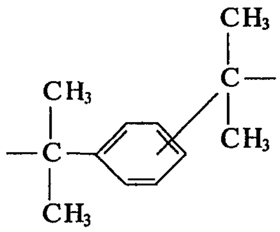

steht,
und/oder der Formel (2),

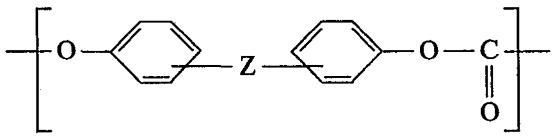

(2)

in der Z für $C_5$—$C_{20}$-Alkylen, $C_5$—$C_{20}$-Alkyliden, $C_5$—$C_{15}$-Cycloalkylen, $C_5$—$C_{15}$-Cycloalkyliden, $C_7$—$C_{20}$-Cycloalkylalkylen oder $C_6$—$C_{20}$-Cycloalkyl-alkyliden steht, entsprechen.

Aromatische Polycarbonate, die 5—30 Mol-% der Struktureinheiten der Formel (1) und/oder (2) enthalten, sowie solche, die 50—100 Mol-% dieser Struktureinheiten enthalten, werden besonders bevorzugt.

Bevorzugte Struktureinheiten der Formel (1) sind diejenigen der Formel (3),

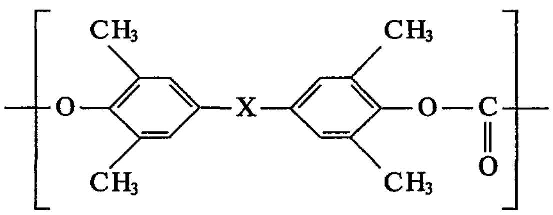

(3)

in der X die vorstehend genannte Bedeutung hat.

Den Struktureinheiten der Formel (3) können beispielsweise die folgenden Bisphenole zugrunde gelegt werden:

Bis(3,5-dimethyl-4-hydroxyphenyl), Bis(3,5-dimethyl-4-hydroxyphenyl)ether,
Bis(3,5-dimethyl-4-hydroxyphenyl)carbonyl, Bis(3,5-dimethyl-4-hydroxyphenyl)methan,
1,1-Bis(3,5-dimethyl-4-hydroxyphenyl)ethan, 1,1-Bis(3,5-dimethyl-4-hydroxyphenyl)propan,
2,2-Bis(3,5-dimethyl-4-hydroxyphenyl)butan,
2,4-Bis(3,5-dimethyl-4-hydroxyphenyl)-2-methylbutan,
2,4-Bis(3,5-dimethyl-4-hydroxyphenyl)butan, 3,3-Bis(3,5-dimethyl-4-hydroxyphenyl)pentan,
3,3-Bis(3,5-dimethyl-4-hydroxyphenyl)hexan, 4,4-Bis(3,5-dimethyl-4-hydroxyphenyl)heptan,
2,2-Bis(3,5-dimethyl-4-hydroxyphenyl)octan, 2,2-Bis(3,5-dimethyl-4-hydroxyphenyl)nonan,
2,2-Bis(3,5-dimethyl-4-hydroxyphenyl)decan, 1,1-Bis(3,5-dimethyl-4-hydroxyphenyl)cyclohexan,
1,4-Bis(3,5-dimethyl-4-hydroxyphenyl)cyclohexan,
$\alpha,\alpha'$-Bis(3,5-dimethyl-4-hydroxyphenyl)-p-diisopropylbenzol und
$\alpha,\alpha'$-Bis(3,5-dimethyl-4-hydroxyphenyl)-m-diisopropylbenzol.

Diejenigen Struktureinheiten der Formeln (1) und (2), denen die folgenden Bisphenole zugrunde liegen, werden besonders bevorzugt:

Bis(3,5-dimethyl-4-hydroxyphenyl)methan, 2,2-Bis(3,5-dimethyl-4-hydroxyphenyl)propan,
2,4-Bis(3,5-dimethyl-4-hydroxyphenyl)-2-methylbutan,
1,1-Bis(3,5-dimethyl-4-hydroxyphenyl)cyclohexan,
$\alpha,\alpha'$-Bis(3,5-dimethyl-4-hydroxyphenyl)-p-diisopropylbenzol,
2,2-Bis(3,5-dichloro-4-hydroxyphenyl)propan, 2,2-Bis(3,5-dibromo-4-hydroxyphenyl)propan,
1,1-Bis(4-hydroxyphenyl)cyclohexan, $\alpha,\alpha'$-Bis(4-hydroxyphenyl)-m-diisopropylbenzol,
$\alpha,\alpha'$-Bis(4-hydroxyphenyl)-p-diisopropylbenzol, 2,4-Bis(4-hydroxyphenyl)-2-methylbutan,
2,2-Bis(3-methyl-4-hydroxyphenyl)propan und 2,2-Bis(3-chloro-4-hydroxyphenyl)propan.

Zusätzlich zu den Struktureinheiten der Formeln (1) und (2) enthalten die bevorzugten Polycarbonate vorzugsweise Struktureinheiten der Formel (4):

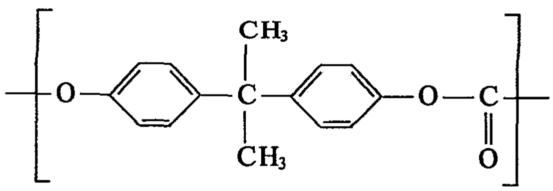

(4)

Polycarbonate, die allein auf den obenerwähnten o,o,o',o'-tetramethyl-substituierten Bisphenolen basieren, sind besonders wichtig und von diesen besonders das Homopolycarbonat auf der Basis von 2,2-Bis(3,5-dimethyl-4-hydroxyphenyl)propan.

Ebenfalls geeignet für die Herstellung von Polycarbonaten gemäß der vorliegenden Erfindung sind die Hydroxybenzole der Strukturformel:

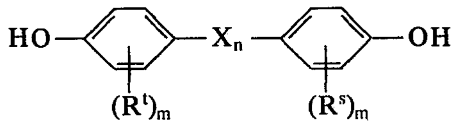

in der $R^t$ und $R^s$ unabhängig voneinander $C_1-C_{10}$-Alkyle bezeichnen, m eine ganze Zahl von 0—2, X S,

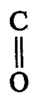 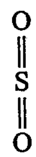 oder 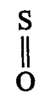

und n entweder 0 oder 1 ist.

Zu den für die praktische Ausführung der Erfindung besonders geeigneten Harzen gehören Polycarbonat auf Phenolphtal-Basis, Copolycarbonate und Terpolycarbonate, wie sie in den US-PS 3 036 036 und 4 210 741 beschrieben wurden.

Zur Erzielung besonderer Eigenschaften können auch Gemische aus verschiedenen Di(monohydroxyaryl)alkanen verwendet werden; auf diese Weise werden gemischte Polycarbonat-Harze erhalten. Bei weitem die wertvollsten Polycarbonat-Harze sind diejenigen auf der Basis von 4,4'-Dihydroxydiarylmethanen und im besonderen von Bisphenol A [2,2-(4,4'-Dihydroxydiphenyl)propan]. So wird, wenn das die Grundlage bildende Polycarbonat mit flammwidrigen Eigenschaften ausgestattet werden soll, eine Mischung aus Bisphenol A und Tetrabromobisphenol A [2,2-(3,5,3',5'-tetrabromo-4,4'-dihydroxydiphenyl)propan] für die Reaktion mit Phosgen oder einem vergleichbaren Kohlensäurederivat eingesetzt. Andere halogenierte phenolische Diole sind geeignete Bishydroxyarylverbindungen wie Halogen enthaltende Bisphenole wie 2,2-(3,5,3',5'-Tetrachloro-4,4'-dihydroxydiphenyl)propan, 2,2-(3,3'-Dichloro-4-4'-dihydroxydiphenyl)propan, 2,2-(3,3'-Dichloro-5,5'-dimethyl-4,4'-dihydroxyphenyl)propan, 2,2-(3,3'-Dibromo-4,4'-dihydroxydiphenyl)propan und dergleichen. Diese halogenierten Diole werden in Mengenanteilen in die Polycarbonate eingearbeitet, die genügen, um diesen flammwidrige Eigenschaften zu verleihen. Zum Beispiel ist normalerweise ein Halogen-Gehalt von etwa 3 bis 10 Gew.-% ausreichend.

Die Polycarbonate gemäß der vorliegenden Erfindung können auch dadurch verzweigt werden, daß geringe Mengen von Polyhydroxyl-Verbindungen durch Kondensation in sie eingearbeitet werden, z. B. 0,05—2,0 Mol-% (bezogen auf die Menge des eingesetzten Bisphenols). Polycarbonate dieses Typs wurden beispielsweise beschrieben in den DE-OS 1 570 533, 2 116 974 und 2 113 347, der GB-PS und der US-PS 3 544 514. Nachstehend genannt werden einige Beispiele für Polyhydroxyl-Verbindungen, die zu diesem Zweck verwendet werden können: Phloroglucin, 4,6-Dimethyl-2,4,6-tri(4-hydroxyphenyl)hepten-2, 4,6-Dimethyl-2,4,6-tri(4-hydroxyphenyl)heptan, 1,3,5-Tri(4-hydroxyphenyl)benzol, 1,1,1-Tri(4-hydroxyphenyl)ethan, Tri(4-hydroxyphenyl)phenylmethan, 2,2-Bis[4,4-(4,4'-dihydroxydiphenyl)cyclohexyl]propan, 2,4-Bis(4-hydroxyphenylisopropyl)phenol, 2,6-Bis(2'-hydroxy-5'-methylbenzyl)-4-methylphenol, 2,4-Dihydroxybenzoesäure, 2-(4-Hydroxyphenyl)-2-(2,4-dihydroxyphenyl)propan und 1,4-Bis(4',4''-dihydroxytriphenylmethyl)benzol.

Neben dem obenerwähnten Polykondensationsverfahren, dessen wesentliche Merkmale nachstehend beschrieben werden, sind andere Verfahren zur Herstellung der Polycarbonate gemäß der vorliegenden Erfindung die Polykondensation in homogener Phase und die Umesterung. Die geeigneten Verfahren werden in den US-PS 3 028 365, 2 999 846, 3 153 008 und 2 991 273 offenbart.

Das bevorzugte Verfahren ist das Grenzflächen-Polykondensationsverfahren.

Beim Grenzflächen-Polykondensationsverfahren werden Polycarbonatharze dadurch erhalten, daß die aromatischen Dihydroxy-Verbindungen mit einem Alkali-Metall-Hydroxid oder einem Erdalkali-Metall-Oxid oder -Hydroxid umgesetzt werden, wobei das Salz der betreffenden Hydroxid-Verbindungen gebildet wird. Die Salzmischung liegt in wäßriger Lösung oder Suspension vor und wird mit Phosgen, Carbonylbromid oder Bis-Chlorameisensäure-Estern der aromatischen Dihydroxy-Verbindungen umgesetzt. In der Reaktionsmischung wird ein organisches Lösungsmittel verwendet, das ein Lösungsmittel für das Polymerisat, nicht aber für die aromatischen Dihydroxy-Salze ist. So werden chlorierte aliphatische Kohlenwasserstoffe oder chlorierte aromatische Kohlenwasserstoffe als das organische Lösungsmittel verwendet, das das Kondensationsprodukt löst. Zur Begrenzung des Molekulargewichts kann man monofunktionelle Reaktionsteilnehmer wie Monophenole, beispielsweise die Propyl-, Isopropyl- und Butyl-Phenole, insbesondere p-tert.-Butylphenol und Phenol selbst verwenden. Zur Beschleunigung der Reaktion können Katalysatoren wie tertiäre Amine, quaternäre Ammonium-, Phosphonium- oder Arsonium-Salze und dergleichen verwendet werden. Die Reaktionstemperatur sollte etwa —20° C bis +150° C, vorzugsweise 0° C bis etwa 100° C, betragen.

Beim Polykondensationsverfahren in homogener Phase werden die gelösten Reaktionskomponenten in einem inerten Lösungsmittel in Gegenwart einer zur Aufnahme des entstehenden HCl erforderlichen äquivalenten Menge einer tertiären Amin-Base, wie z. B. N,N-Dimethylanilin, N,N-Dimethylcyclohexylamin, oder vorzugsweise Pyridin, und dergleichen polykondensiert. Bei einem anderen Verfahren kann ein Diarylcarbonat mit den aromatischen Dihydroxy-Verbindungen umgeestert werden, wobei das Polycarbonat-Harz gebildet wird.

Es ist darauf hinzuweisen, daß es möglich ist, bei den vorstehend beschriebenen Verfahren in chemisch sinnvoller Weise sowohl die aromatischen Dihydroxy-Verbindungen als auch die Monohydroxy-Verbindungen in Form der Alkalimetall-Salze und/oder der Bis-halogenameisensäureester und die Menge Phosgen oder Carbonylbromid, die dann noch erforderlich ist, um hochmolekulare Produkte zu erhalten, miteinander zu kombinieren. Auch andere Syntheseverfahren zur Bildung der Polycarbonate gemäß der Erfindung, etwa entsprechend der Beschreibung in der US-PS 3 912 688, können angewandt werden.

Die erfindungsgemäß einzusetzenden Imid-Derivate werden aus den entsprechenden Polyanhydridharzen mit primären Aminen in bekannter Weise erhalten, beispielsweise auch gemäß der weiter unten beschriebenen Herstellung des in den Beispielen verwendeten Imid-Derivats.

Die entsprechenden Polyanhydridharze sind durch ihre Strukturformel

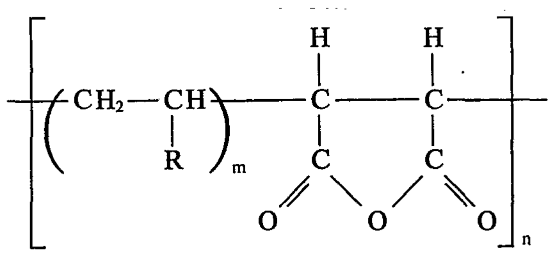

gekennzeichnet, in der R ein anhaftender Alkyl-Rest mit 6—28 Kohlenstoff-Atomen, und besonders bevorzugt von 16 Kohlenstoff-Atomen, n eine ganze Zahl von 1—200 und m eine ganze Zahl von 1—3 bezeichnen. In der vor allen anderen bevorzugten Ausführungsform sind n etwa 145 und m 1. Das Polyanhydrid-Harz ist im wesentlichen ein Copolymerisat aus Maleinsäureanhydrid und einem $\alpha$-Olefin, wobei die Herstellung dieses Copolymerisats in der US-PS 3 586 659 beschrieben wird. Beispiele für die Olefin-Verbindungen oder Gemische aus Olefinen, die sich zur Bildung des Polyanhydrid-Bestandteils der Zusammensetzung eignen, sind: 1-Decen, 1-Undecen, 1-Dodecen, 1-Tridecen, 1-Octen, 1-Tetradecen, 1-Octadecen, 1-Nonadecen, 1-Nonen sowie Gemische aus diesen.

Die Copolymerisation kann in der Weise durchgeführt werden, daß die olefinische Verbindung mit dem Maleinsäureanhydrid in einem geeigneten Lösungsmittel in Gegenwart eines Katalysators in Berührung gebracht wird. Das Mol-Verhältnis des Mono-$\alpha$-Olefins zu dem Maleinsäureanhydrid liegt zweckmäßigerweise etwa zwischen 1 : 1 und 3 : 1.

Das bevorzugte, für die praktische Ausführung der vorliegenden Erfindung geeignete, Polyanhydrid ist ein Copolymerisat aus 1-Octadecen und Maleinsäureanhydrid in einem Mol-Verhältnis 1 : 1 und ist bei der Gulf Oil Company unter der Handelsbezeichnung PA-18® erhältlich. PA-18® ist im einzelnen durch die in der folgenden Tabelle aufgeführten Eigenschaften gekennzeichnet:

| | |
|---|---|
| Farbe/Form | weißes Pulver |
| Molekulargewicht | 50 000 |
| spezifisches Gewicht | 0,97 |
| Schmelzpunktbereich | 110—120 |
| logarithmische Viskositätszahl (*) | 0,10—0,13 |
| Viskosität | |
| bei 150° C (cP) | 20 000 |
| bei 160° C (cP) | 8 000 |
| Anhydrid-Äquivalent (Milliäquivalent/g) | 3,10—3,25 |
| Neutralisations-Äquivalent (Milliäquivalent/g) | 4,83—5,53 |
| Anhydrid-Gehalt (Gewichts-%) | 15—23 |
| Säure-Gehalt (Gewichts-%) | 5—10 |

| | |
|---|---|
| Flüchtige Bestandteile (%) | <1 |
| Monomer-Restgehalt | <3 |
| Thermische Stabilität (% Gewichtsverlust) | |
| bei 250° C | 1 |
| bei 300° C | 3 |
| bei 350° C | 10 |
| bei 400° C | 23 |

(*) 5 g/100 ml in Methylisobutylketon bei 25° C.

Das in den Beispielen verwendete Imid-Derivat kann wie nachstehend beschrieben hergestellt werden.

4 l trockenes DMF (destilliert über CaO) und Anilin (233 g) wurden in einen Dreihals-Reaktionskolben gefüllt. Die Lösung wird gerührt und zur Entfernung von Sauerstoff wird $N_2$ etwa 15 min eingeleitet. Eine Charge von 2 l trockenem DMF und Pa-18® (453 g) wird in den Reaktionskolben gegeben, der bei etwa 0° C gehalten wird. Nach etwa einer Stunde wird die Reaktionsmischung zum Rückfluß erhitzt, um die Cyclisierung der Polyamid-Säure zu dem Imid herbeizuführen. Nach sechsstündigem Erhitzen unter Rückfluß wird das Reaktionsgefäß gekühlt, das DMF wird abgetrieben, und das Polyimid wird ausgefällt und gewaschen. Die Bildung des Imids wurde durch NMR- und IR-Spektren bestätigt.

Zur Herstellung der Formmassen gemäß der vorliegenden Erfindung werden die einzelnen Bestandteile in bekannten Mischvorrichtungen wie Knetern, Einschneckenextrudern, Doppelschneckenextrudern, Mischwalzwerken und dergleichen miteinander vermischt.

Die Erfindung wird durch die folgenden Beispiele weiter erläutert, ist jedoch nicht auf diese beschränkt.

## Beispiele

### Beispiele 1—3

Formmassen gemäß der vorliegenden Erfindung, die Polycarbonat-Harz (ein aromatisches Polycarbonat auf der Basis von Bisphenol A und mit einer Schmelzflußrate von etwa 6—12 g/10 min bei 300° C, im Handel erhältlich bei der Mobay Chemical Corporation) und Imid-Derivat enthielten, wurden hergestellt und geprüft. Die Massen wurden in einem Einschneckenextruder (Kompressionsverhältnis 1,75 : 1; Temperaturprofil 249, 288, 271, 271° C (480, 550, 520, 520° F) kompoundiert, granuliert und durch Spritzguß zu Probekörpern gepreßt. Formpreßbedingungen: Chrom-plattiertes Mehrfachwerkzeug mit Endanschnitt; Formtemperatur 66° C (150° F); Dauer des Spritzcyclus 35 s; Schneckendrehgeschwindigkeit 80 $min^{-1}$; Zylindertemperatur 288° C (550° F); Düsentemperatur 271° C (520° F); primärer Spritzdruck 62,1 bar (900 psi); sekundärer Spritzdruck 51,7 bar (750 psi); Rückdruck 3,45 bar (50 psi). Die folgende Tabelle faßt die Ergebnisse der Prüfung zusammen:

Tabelle

| Beispiel | Imidisiertes Derivat Gew.-% | Schlagzähigkeit 3,2 mm (1/8″) —Izod— Kerbschlagzähigkeit J/cm (ft. lb/in.) | 6,35 mm (1/4″) —Izod— Kerbschlagzähigkeit J/cm (ft. lb/in.) | Kritische Dicke mm (mil) | HDT*) bei 1,82 MPa (° C) |
|---|---|---|---|---|---|
| 1 | 1,0 | 9,064 (16,98) | 2,58 (4,83) | 6,22 (245) | 130,2 |
| 2 | 3,0 | 7,703 (14,43) | 8,023 (15,03) | >6,48 (>255) | 130,4 |
| 3 | 4,0 | 8,503 (15,93) | 6,758 (12,66) | >6,48 (>255) | 130,5 |
| Kontrolle | — | 9,939 (18,62) | 1,70 (3,18) | 5,46 (215) | 130,5 |

*) Formbeständigkeit in der Wärme

**Patentansprüche**

1. Thermoplastische aromatische Polycarbonat-Zusammensetzung mit verbesserter Schlagfestigkeit, enthaltend

(a) ein aromatisches Polycarbonat-Harz und
(b) von etwa 1 bis 4 Gew.-%, bezogen auf das Gewicht der Zusammensetzung, eines linearen Copolymerisats aus einem imidisiertem Derivat des Maleinsäureanhydrids und einem $\alpha$-Olefin der allgemeinen Formel

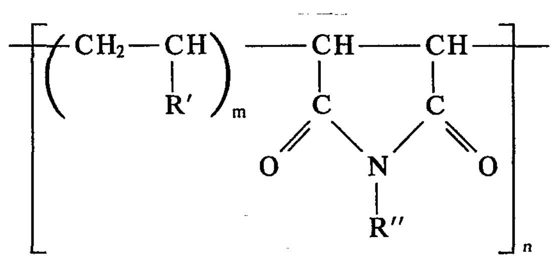

in der R′ ein $C_6$—$C_{28}$-Alkyl, R″ ein Aryl-Rest mit 6—12 Kohlenstoff-Atomen oder ein aliphatischer Rest mit 1—30 Kohlenstoff-Atomen, n von 1—200 und m von 1—3 sind.

2. Zusammensetzung nach Anspruch 1, dadurch gekennzeichnet, daß R′ ein $C_{16}$-Alkyl ist.

**Claims**

1. Thermoplastic aromatic polycarbonate composition having improved impact strength and containing

(a) an aromatic polycarbonate resin and
(b) from about 1 to 4% by weight, based on the weight of the composition, of a linear copolymer of an imidised derivative of maleic anhydride and an $\alpha$-olefin of the general formula

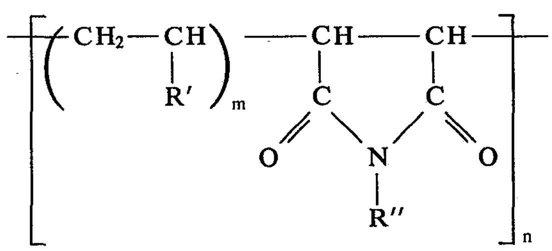

in which
R′ is a $C_6$—$C_{28}$-alkyl,
R″ is an aryl radical with 6—12 carbon atoms or an aliphatic radical with 1—30 carbon atoms,
n is from 1—200 and
m is from 1—3.

2. Composition according to Claim 1, characterised in that R′ is a $C_{16}$-alkyl.

**Revendications**

1. Composition de polycarbonate aromatique thermoplastique à résistance au choc améliorée, contenant

(a) une résine de polycarbonate aromatique et
(b) environ 1 à 4% en poids, par rapport au poids de la composition, d'un copolymère linéaire d'un dérivé imidé de l'anhydride maléique et d'une $\alpha$-oléfine de formule générale:

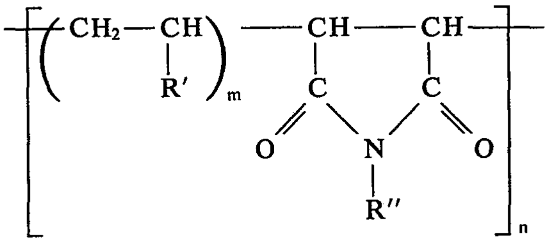

dans laquelle R′ représente un groupe alkyle en $C_6—C_{28}$, R″ représente un groupe aryle en $C_6—C_{12}$ ou un reste aliphatique en $C_1—C_{30}$, n a une valeur de 1 à 200 et m une valeur de 1 à 3.

2. Composition selon la revendication 1, caractérisée en ce que R′ représente un groupe alkyle en $C_{16}$.